# EUROPÄISCHE PATENTSCHRIFT

(11) **EP 1 055 845 B1**
(45) Veröffentlichungstag und Bekanntmachung des Hinweises auf die Patenterteilung: **12.01.2005**
(21) Anmeldenummer: 00109498.6
(22) Anmeldetag: 04.05.2000
(51) Int. Cl.: F16H 61/02, F16H 63/44, B60K 41/08

(54) **Verfahren und Vorrichtung zum Schalten eines Wechselgetriebes eines Nutzfahrzeuges**
Shift control method and apparatus for multispeed transmission of an industrial vehicle
Procédé et dispositif de changement de vitesse pour transmission à plusieurs rapports de véhicule utilitaire

(30) Priorität: 25.05.1999 DE 19923867
(43) Veröffentlichungstag der Anmeldung: 29.11.2000
(73) Patentinhaber: MAN Nutzfahrzeuge Aktiengesellschaft, 80976 München (DE)
(72) Erfinder: Schaller, Karl-Viktor, Dr.-Ing., 82149 Gröbenzell (DE)

(56) Entgegenhaltungen:
- EP-A- 0 316 679
- EP-A- 0 480 633
- EP-A- 0 612 642
- EP-A- 0 769 641
- EP-A- 0 896 172
- US-A- 5 411 450

## Beschreibung

Die Erfindung betrifft eine Vorrichtung zum Schalten eines Gänge vorwählbaren, automatisch schaltenden, synchronisierten Wechselgetriebes eines Nutzfahrzeuges gemäß dem Oberbegriff des Anspruches 1.

Der Aufbau von Nutzfahrzeug-Synchrongetrieben ist in Gruppenbauweise üblich.

Die Gruppen sind in Splitgruppe mit zwei Gängen, Hauptgruppe mit vier Gängen und Bereichsgruppe oder Nachschaltgruppe mit zwei Gängen unterteilt.

In der Splitgruppe sind kleine, in der Hauptgruppe mittlere und in der Bereichsgruppe große Übersetzungen schaltbar.

In der Bereichsgruppe ist meistens ein Planetengetriebe eingebaut, es gibt aber auch Getriebe, die hier ein Stirnradgetriebe haben.

Eine Vorrichtung der eingangs genannten Art, von welcher im Oberbegriff des Patentanspruches 1 ausgegangen wird, ist aus der EP-A-0 316 679 bekannt. Die bekannte Vorrichtung besitzt in der Bereichsgruppe zwei Übersetzungen bildende Stirnradgetriebe. Diese können mit Hilfe einer Schaltschiebemuffe, die zwei Kupplungen aufweist, eingestellt werden. Mittels einer zusätzlichen eine Kupplung aufweisenden Schaltschiebemuffe kann die Getriebehauptwelle an die Getriebeabtriebswelle gekuppelt werden. Bei von der Getriebeabtriebswelle gelöster Kupplung kann das Bereichsgetriebe vom restlichen Wechseigetriebe entkoppelt werden.

Mechanische Synchronisiereinrichtungen sind bekannten Synchronringe, die über Schaltgabein axial zu einem Synchronisierungskonus hin bewegt werden und dann die Verbindung zwischen Welle und Zahnrad herstellen. In der Bereichsgruppe ist eine Schaltung nur dann möglich, wenn in der Hauptgruppe die Neutralstellung der Synchronringe geschaltet ist, da dann nur das Massenträgheitsmoment der Getriebehauptwelle überwunden werden muß.

Die Schaltstellen in der Split- und Hauptgruppe, das sind die Synchronisiereinrichtungen von Zahnrad zu Welle, sind so dimensioniert, daß sie das anteilige Trägheitsmoment von Getriebeteilen, wie Zahnräder und Wellen und das Trägheitsmoment der geöffneten Kupplung synchronisieren müssen und daß sie für den Dauereinsatz geeignet sein müssen. Die Massenträgheitsmomente sind nicht uner-heblich und haben als Folge, daß die Synchronisiereinrichtungen kräftig dimensioniert sind.

Aufgabe der Erfindung ist es, eine Vorrichtung der eingangs genannten Art zu schaffen, bei welcher ein einfacher Schaltmechanismus in der Bereichsgruppe zum Einsatz kommt.

Diese Aufgabe wird erfindungsgemäß durch die kennzeichnenden Merkmale des Patentanspruches 1 gelöst.

Im nachfolgenden Teil werden die Vorgänge mit einem Planetengetriebe als Bereichsgruppe dargestellt.

Dadurch, daß eine stabile Zwischenstellung der Synchronisiereinrichtung oder Klauenkupplung in der Bereichsgruppe geschaffen ist, in der das Hohlrad des Planetengetriebes frei drehbar, also in Leerlaufstellung" schaltbar ist, muß bei einem Schaltvorgang im Hauptgetriebe nur das Massenträgheitsmoment des Losrades, das geschaltet wird und das Massenträgheitsmoment der Zwischenwelle synchronisiert werden. Damit ist das Massenträgheitsmoment, das synchronisiert werden muß, erheblich gegenüber dem Stand der Technik reduziert. Zum Ausrücken der beispielsweise Klauenkupplung in die stabile Zwischenlage ist ein Momenten-Nulldurchgang, veranlaßt durch die Motorsteuerung bzw. den Bordrechner erforderlich. Die Kupplung zwischen Motor und Getriebe wird dabei nicht geöffnet.

Damit nun mit geringster Synchronisierarbeit die Bereichsgruppe mit der entsprechenden Übersetzung wieder kraftschlüssig an den Rest des Getriebes angebunden wird, muß über die Motorführung die Motordrehzahl angefahren werden, die sich aus der momentanen Fahrzeuggeschwindigkeit und der noch zu schaltenden Übersetzung in der Bereichsgruppe einerseits und der Übersetzung, die im Hauptgetriebe geschaltet wurde andererseits, ergibt.

Der Schalthebel zum Schalten der Gänge muß eine Sensierung aufweisen, damit der gewünschte Gang für den Bordrechner erkennbar ist und der Bordrechner dann die Signale zum Betätigen des Getriebes geben kann.

Je nach Schalteinrichtung im Fahrzeug ist es aber auch möglich, die Drehzahl der Hauptwelte im Getriebe zu sensieren, und diese als Signal an den Bordrechner zu geben, da sich über die Hauptwelle immer die aktuell geschaltete Übersetzung ermitteln läßt und damit die Drehzahlsynchronisierung von der Motorseite her möglich ist.

Der Vorteil der Vorrichtung ist, daß die Synchronisiereinrichtungen im Hauptgetriebe und beispielsweise eine preiswerte Klauenkupplung mit einer Schaltschiebemuffe anstatt einer teueren Synchronisiereinrichtung in der Bereichsgruppe wesentlich kleiner dimensionieren und damit Gewicht und Kosten erheblich gesenkt werden können. Die Standzeit des Getriebes bzw. der Synchronisiereinrichtungen wird dabei nicht beeinflußt.

In der Zeichnung ist ein Ausführungsbeispiel der Erfindung schematisch dargestellt.

Es zeigen:
- Fig. 1: die Schaltstellung für das Bereichsgetriebe mit zum Getriebegehäuse festgehaltenem Hohlrad (i ≈ 1 : 5),
- Fig. 2: die stabile Zwischenstellung,
- Fig. 3: die Schaltstellung durchgekuppelt", in der das Hohlrad mit der Abtriebswelle gekuppelt ist (i = 1 : 1),
- Fig. 4: den Stand der Technik.

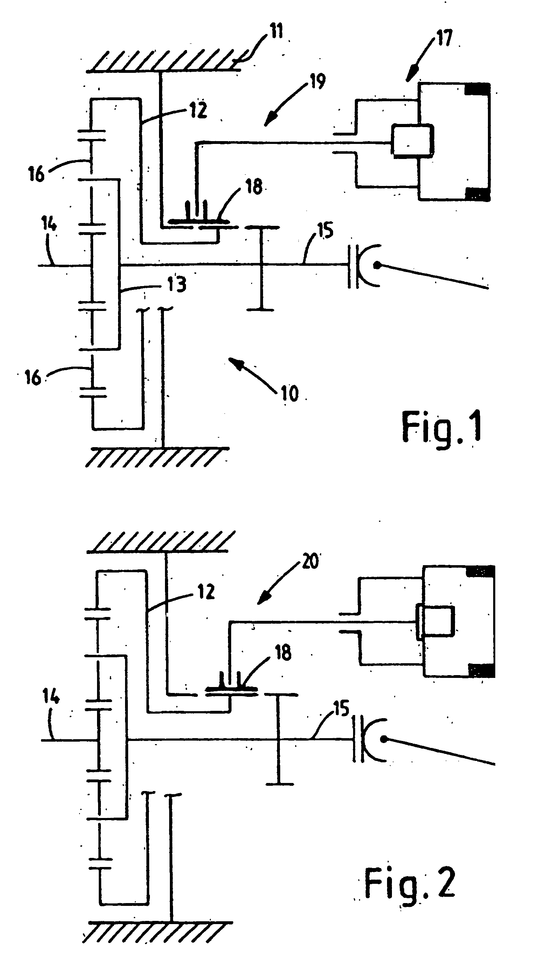

Die Fig. 1 zeigt das Planetengetriebe, das die Bereichsgruppe 10 in der Stellung 19 darstellt. Die Stelleinheit 17 verbindet über die Schaltschiebemuffe 18 das Hohlrad 12 mit dem Getriebegehäuse 11. Das Hohlrad ist damit feststehend. Dadurch wirkt die Übersetzung von i ≈ 1: 5 des Zahnrades auf der Hauptwelle 14 über die Planetenräder 16 zum Steg 13 und damit zur Abtriebswelle 15.

Die Fig. 2 zeigt die stabile Zwischenstellung 20. Die Schaltschiebemuffe 18 läßt in der Zwischenstellung 20 das Hohlrad 12 frei drehend. Dadurch ist keine formschlüssige Verbindung mehr zwischen der Hauptwelle 14 und der Abtriebswelle 15 vorhanden. Bei Schattvorgängen, die im Hauptgetriebe erfolgen, müssen nur noch die Massenträgheitsmomente des zu schaltenden Losrades auf der Hauptwelle und das der Zwischenwelle mit den Zahnrädern durch die Synchronisiereinrichtung im Hauptgetriebe überwunden werden. Zum Ausrücken der Schaftschiebemuffe 18 aus der Stellung 19 in die stabile Zwischenstellung 20 ist ein Momenten-Nulldurchgang forderlich, den der Antriebsmotor über die Regelung, z. B. über den Bordrechner, durchführt. Die Reibungskupplung zwischen Motor und Getriebe wird daher nicht geöffnet.

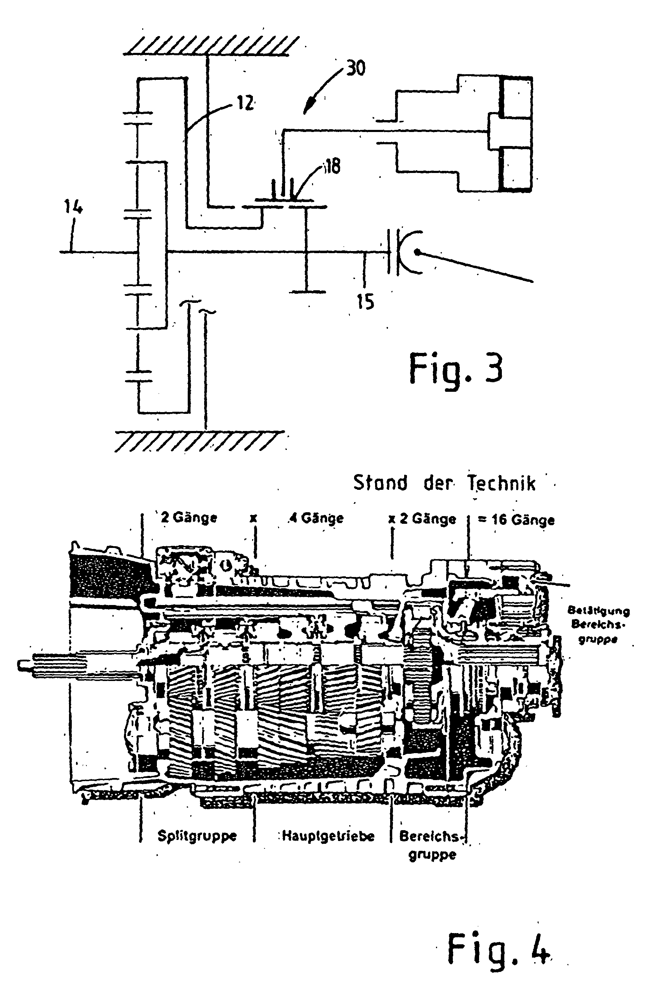

Die Fig. 3 zeigt die Durchtriebsstellung 30. Die Schaltschiebemuffe 18 verbindet das Hohlrad 12 mit der Abtriebswelle 15 und damit, über die Planetenräder, die Hauptwelle 14 mit der Abtriebswelle 15.

Die Fig. 4 zeigt den Stand der Technik. Das Getriebe ist eingeteilt in Splitgruppe, Hauptgetriebe und Bereichsgruppe. Die Kupplung ist nicht dargestellt. Der Einbauort ist vor der Splitgruppe. Die Synchronisiereinrichtung ist so dimensioniert, daß der getriebeseitige Anteil des Massenträgheitsmomentes der Kupptung und das der zu schaltenden Zahnräder und der entsprechenden Wellen bei einem Schaltvorgang synchronisiert werden. In der Bereichsgruppe kann entweder die Stellung Hohlrad mit Gehäuse verbunden", dann wirkt die Übersetzung des Planetengetriebes i ≈ 1: 5, oder "Hohlrad mit Abtriebswelle verbunden", geschaltet werden, dann wirkt die Übersetzung i = 1:1.

## Patentansprüche

1. Vorrichtung zum Schalten eines die Gänge vorwählbaren, automatisch schaltenden, synchronisierten Wechselgetriebes eines Nutzfahrzeugs
- mit einem Getriebegehäuse (11), in welchem eine Splitgruppe, ein Hauptgetriebe und eine Bereichsgruppe (10) angeordnet sind,
- wobei das Hauptgetriebe und die Splitgruppe Stirnräder aufweisen
- wobei die Bereichsgruppe (10) zur Übertragung eines von einem Dieselmotor erzeugten Antriebsmoments von einer Getriebehauptwelle (14) auf eine Getriebeantriebswel (15) in wenigstens zwei Übersetzungen und weiterhin in eine die Bereichsgruppe (10) vom restlichen Wechselgetriebe entkoppelnde Stellung mit einem Schaltmechanismus schaltbar ist,
- mit einer zwischen dem Dieselmotor und dem Wechselgetriebe angeordneten Reibungskupplung und
- mit einer von einem Bordrechner regelbaren Treibstoffzumessung für den Dieselmotor,
**dadurch gekennzeichnet, dass**
- die Bereichsgruppe (10) ein Planetengetriebe mit einem Hohlrad (12) und an der Getriebeabtriebswelle (15) gelagerte mit dem Hohlrad (12) und der Hauptwelle (14) kämmende Planetenräder (16) aufweist, und
- der Schaltmechanismus der Bereichsgruppe (10) eine Schaltschiebemuffe (18) mit einer Klauenkupplung aufweist, welche für die beiden Übersetzungen in eine erste und zweite Schaltstellung und eine dazwischenliegende, stabile Zwischenstellung, in welcher die Bereichsgruppe (10) vom restlichen Wechselgetriebe entkoppelt ist, bewegbar ist, wobei
- in der ersten Schaltstellung das Hohlrad (16) feststehend mit dem Getriebegehäuse (11) verbunden ist und in der zweiten Schaltstellung das Hohlrad (16) an die Antriebswelle (15) gekoppelt ist, und in der stabilen Zwischenstellung das Hohlrad (12) freidrehend ist.

2. Vorrichtung nach Anspruch 1, **dadurch gekennzeichnet, daß** zum Schalten in die stabile Zwischenstellung . (20) ein Momenten-Nulldurchgang über den Bordrechner, infolge eines Anforderungssignals für einen Schaltvorgang, herbeiZuführen ist.

3. Vorrichtung nach den Anspruch 1 oder 2, **dadurch gekennzeichnet, daß** bei abgekuppelter Bereichsgruppe (10) der angeforderte Gang im Hauptgetriebe über eine Synchronisiereinrichtung schaltbar ist.

4. Vorrichtung nach einem der vorhergehenden Ansprüche, **dadurch gekennzeichnet, daß** bei einem bestimmten Drehzalsignal der Getriebehauptwelle (14), einem bestimmten Drehzahlsignal der Getriebeabtriebswelle (15) und einer vorgewählten Übersetzung (19, 30) in der Bereichsgruppe (10) durch Bordrechner eine erforderliche Motordrehzahl für den Synchronlauf von Splitgruppe mit Hauptgetriebe und der Bereichsgruppe (10) herzustellen ist und dann die vorgewählte Übersetzung (19, 30) in der Bereichsgruppe (10) aus der stabilen Zwischenstettung (20) heraus zu schalten ist.

## Claims

1. Device for shifting an automatically shifting, synchronised variable-speed gearbox in a commercial vehicle, which variable-speed gearbox can preselect the gears and is provided
• with a gearbox housing (11) in which a splitter box, a main gearbox and a range-change box (10) are arranged,
• whereby the main gearbox and the splitter box have spur gears,
• whereby for transmitting a drive torque, generated by a diesel engine, from a gearbox mainshaft (14) to a gearbox drive shaft (15) the range-change box (10) can be shifted with one shifting mechanism into at least two transmission modes and also into a position which decouples the range-change box (10) from the rest of the variable-speed gearbox,
• with a friction clutch arranged between the diesel engine and the variable-speed gearbox,
• with a fuel metering device for the diesel engine, which device can be controlled by an on-board computer,
**characterised in that**
• the range-change box (10) has a planetary gear set with a ring gear (12) and planetary gears (16) that are supported on the gearbox output shaft (15) and mesh with the ring gear (12) and with the mainshaft (14), and
• the gearshift mechanism of the range-change box (10) has a shift-type sliding sleeve (18) with a claw clutch which for the two transmission modes can be moved into a first and a second shifting position and into a stable intermediate position between said first and second positions, in which intermediate position the range-change box (10) is decoupled from the rest of the variable-speed gearbox, whereby
• in the first shifting position the ring gear (16) is fixed and connected with the gearbox housing (11) and in the second shifting position the ring gear (16) is coupled to the drive shaft (15) and in the stable intermediate position the ring gear (12) turns freely.

2. Device according to Claim 1, **characterised in that** for shifting into the stable intermediate position (20) a zero torque is to be set via the on-board computer as a result of a request signal for a shifting action.

3. Device according to the Claim 1 or 2, **characterised in that** if the range-change box (10) is decoupled the required gear in the main gearbox can be shifted via a synchronising device.

4. Device according to one of the foregoing Claims, **characterised in that** if a certain speed signal from the gearbox mainshaft (14) and a certain speed signal from the gearbox output shaft (15) and a preselected transmission mode (19, 30) are provided in the range-change box (10), an engine speed required for the synchronised operation of the splitter box with the main gearbox and the range-change box (10) is to be set by the on-board computer and that then the preselected transmission mode (19, 30) in the range-change box (10) is to be shifted from the stable intermediate position (20).

## Revendications

1. Dispositif pour assurer le changement des rapports d'une boîte de vitesses à présélection des rapports, à passage automatique des rapports et synchronisée d'un véhicule industriel
- avec un carter de boîte de vitesses (11) dans lequel un doubleur de gamme, une boîte de vitesses principale et un groupe-relais (10),
- auquel cas la boîte de vitesses principale et le doubleur de gamme présentent des pignons droits,
- auquel cas le groupe-relais (10) peut être actionné avec un mécanisme de passage de rapport pour transmettre un couple produit par un moteur diesel d'un arbre principal de boîte de vitesses (14) à un arbre d'entraînement de boîte de vitesses (15) dans deux rapports de démultiplications au minimum et ensuite dans une position découplant le groupe-relais (10) du reste de la boîte de vitesses,
- avec un embrayage à friction disposé entre le moteur diesel et la boîte de vitesses et
- avec une unité de dosage de carburant régulable par un ordinateur de bord pour le moteur diesel,
**caractérisé en ce que**
- le groupe-relais (10) présente un train planétaire avec une couronne (12) et des satellites logés sur l'arbre de sortie de la boîte de vitesses avec la couronne (12) et s'engrenant à l'arbre principal (14), et
- le mécanisme de passage de rapport du groupe-relais (10) présente un manchon baladeur (18) avec un embrayage à crabots qui peut être déplacé dans une première et une deuxième position de changement de rapport et une position intermédiaire médiane stable dans laquelle le groupe-relais (10) est découplé du reste de la boîte de vitesses, auquel cas
- la couronne (16) est reliée de manière fixe au carter de boîte de vitesses (11) dans la première position de changement de rapport, la couronne (16) est couplée à l'arbre d'entraînement (15) dans la deuxième position de changement de rapport et la couronne (12) est en rotation libre en position intermédiaire stable.

2. Dispositif selon la revendication 1, **caractérisé en ce qu'**un passage à couple nul doit être envoyé par l'ordinateur de bord suite à un signal de demande de changement d'un rapport pour passer en position intermédiaire stable (20).

3. Dispositif selon la revendication 1 ou 2, **caractérisé en ce qu'**en cas de groupe-relais (10) découplé, le rapport demandé peut être passé dans la boîte de vitesses principale par l'intermédiaire d'un système de synchronisation.

4. Dispositif selon l'une quelconque des revendications mentionnées précédemment, **caractérisé en ce que**, dans le cas d'un signal déterminé de vitesse de rotation de l'arbre principal de boîte de vitesses(14), d'un signal déterminé de vitesse de rotation de l'arbre de sortie de boîte de vitesses (15) et d'un rapport de démultiplication (19, 30) présélectionné dans le groupe-relais (10) par l'ordinateur de bord, un régime moteur indispensable doit être généré pour permettre la rotation synchrone du doubleur de gamme avec la boîte de vitesses principal et du groupe-relais (10), puis le rapport de démultiplication (19, 30) présélectionné doit être passé dans le groupe-relais (10) à partir de la position intermédiaire (20) stable.
